# EUROPEAN PATENT SPECIFICATION

(11) **EP 1 006 398 B1**
(45) Date of publication and mention of the grant of the patent: **14.07.2004**
(21) Application number: 99203890.1
(22) Date of filing: 19.11.1999
(51) Int. Cl.: G03B 19/04, G03B 17/04

(54) **Collapsible roll film camera**
Zusammenklappbare Rollfilmkamera
Appareil photographique rabattable avec pellicule en rouleau

(30) Priority: 03.12.1998 GB 9826480
(43) Date of publication of application: 07.06.2000
(73) Proprietor: EASTMAN KODAK COMPANY, Rochester, New York 14650 (US)
(72) Inventor: Glover, Edward, Harrow, HA1 4TY (GB); Earle, Anthony, Harrow, HA1 4TY (GB)
(74) Representative: Barker, Brenda

(56) References cited:
- US-A- 3 750 549
- US-A- 4 336 986
- US-A- 5 241 338
- US-A- 5 544 833

## Description

### Field of the Invention

The present invention relates to a photographic camera having a device for winding a film strip to form a cylindrical film roll, wherein a film take-up chamber has a flexible arcuate film guide which allows the outside diameter of the film roll to increase.

In the prior art document US-A-5,544,833 a film roll accumulating device is disclosed for forming a film strip into a film roll used in the take-up chamber of a camera. This device comprises an arcuate film guide which, when additional film is fed in, increases its outer diameter. This is founded on the fact that the inside diameter of a cylindrical film roll does not change as additional film is fed into the take-up chamber. In such a case, only the outer diameter of a film roll is caused to increase.

Examples of conventional photographic cameras are disclosed in US-A-5 241 338, US-A-3 750 549, US-A-4 336 986.

### Problem to be Solved by the Invention

It is an object of the invention to provide a photographic camera having a very flat housing measured in the direction of the optical axis. Another object is to provide for such a camera a device for moving a film strip from a film feed chamber into a film take-up chamber where the film strip is received.

### Summary of the Invention

According to the invention this object is attained by means of a photographic camera as defined in claim 1.

The camera is provided with a tension spring which, with its one end, is connected to at least one of the opposite ends of a web and, with its other end, is fixed to said housing, whereby the diameter of the film take-up chamber increases by stretching said tension spring when said film strip is fed into said take-up chamber.

When the photographic camera is brought into its ready position in which it is ready for taking pictures, i.e. when the front plate is in its opened position and the lens plate is positioned in its taking position in which the bellows is unfolded , the loop-shaped chambers together with the included film strip return from an oval shape into the cylindrical shape because of their flexibility.

In detail, the web can be formed such that within an area of said film take-up chamber and/or said film feed chamber said web has a width which is greater than the width of the remaining part of said web, and wherein in said area a cut-out section is provided having a width greater than the width of said remaining part of said web forming two arms on each side of said cut-out section to which one of said tension springs is connected each, and wherein said remaining part of said web is guided such that said loop-shaped chambers are formed.

Further features and advantages of the invention can be inferred from the sub-claims and are described with reference to an embodiment shown in the drawing.

### Brief Description of the Drawings

The drawing shows in
- Fig. 1: a photographic camera according to the invention in its ready position in a top view,
- Fig. 2: the camera according to Fig. 1 in its closed rest position in a top view,
- Fig. 3: a detail of a film take-up chamber of the camera according to Fig. 1 in a three-dimensional view,
- Fig. 4: the detail of the film take-up chamber according to Fig. 3 in a side-view, and
- Fig. 5: a web for forming the film take-up chamber according to Fig. 3 in a plan view.

### Detailed Description of the Invention

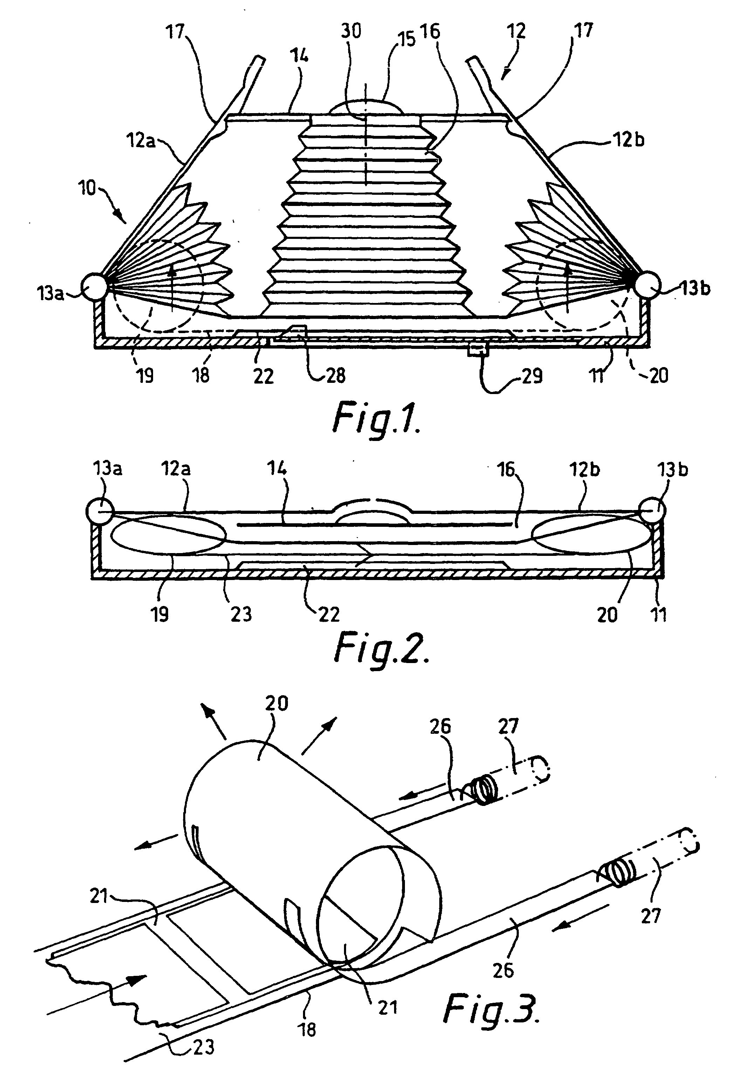

Referring to the drawings, Fig. 1 shows a photographic camera 10 comprising a very flat housing 11. A front plate 12 consists of two halves 12a and 12b which are hingedly mounted on opposite sides of the housing by joints 13a and 13b. The halves 12a and 12b are in their opened positions and a lens plate 14 including a taking lens 15 is positioned in its picture-taking position. The lens plate 14 is connected to the housing 11 by a bellows 16 in a light-tight manner.

Each of the halves 12a and 12b is provided with a guide rail 17 for slidably guiding the lens plate 14 from its rest position to its ready position where it is fixed and back to its rest position in which the camera is in its non-use position, as shown in Fig. 2.

Inside the housing 11, a one-piece web 18 of flexible material is placed which forms at opposite ends of the housing a loop-shaped film feed chamber 19 and a loop-shaped film take-up chamber 20, the diameters of said chambers being greater than the 20, whereby the film strip is moved across a film gate 22 by a film advance member 28 having an outside grip 29.

The transportation of the film strip from one image frame to the next is accomplished when the camera is in its ready position, i.e. the halves 12a and 12b are opened and the lens plate 14 has moved into the picture-taking position. In this position, the loop-shaped chambers 19 and 20 and the scrolled film rolls located in the chambers have a cylindrical shape, which makes the transportation of the film possible.

In the collapsed condition of the camera, when the halves 12a and 12b of the front plate 12 are closed, the cylindrically shaped chambers 19 and 20 are pressed together into an oval shape until a dimension is reached which is dependent on the thickness of the housing 11.

When the camera is opened again into its picture-taking position, the chambers 19 and 20 and the scrolled film strip 21 therein return to their cylindrical shapes. This is possible because of the technically advanced properties of the film strip which may be an APS film (Advanced Photo System).

It has been proved by several experiments that a loop-shaped chamber of about 20 mm in diameter and the included film strip can be pressed together to an oval shape of about 7 mm in height and that the film strip and the chamber will return to their original shapes when the pressure is removed. This feature is the basis for the realization of a camera of such a flat form.

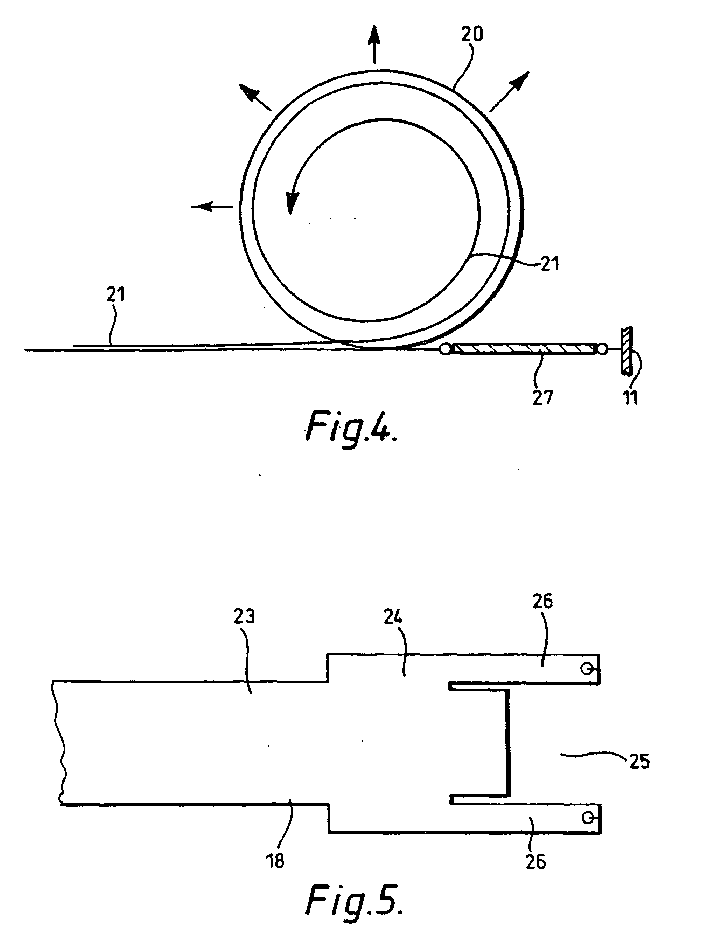

Regarding Figs. 4 and 5 of the drawing, one can recognize how the web 18 is designed to form the take-up chamber 20 and how the function of the same is. Within an area 24 of the take-up chamber 20, the web 18 has a width which is greater than the width of the remaining part 23 of the web 18. This area 24 is provided with a cut-out section 25 having a width which is a little greater than the width of the remaining part 23 of the web 18. The cut-out section 25 forms two arms 26, one on each side of said cut-out section 25, to which a tension spring 27 is connected each. The other end of the tension spring 27 is connected to the housing 11.

In order to form the loop-shaped film take-up chamber 20 the remaining part 23 of the web 18 is guided through the cut-out section 25 and then led into the direction of the film feed chamber 19. In order to form the film feed chamber 19, the web 18 has an area of the same design as described for the take-up chamber 20.

When a film strip 21 is fed from the film feed chamber 19 across the film gate 22 into the film take-up chamber 20, the growing scroll of the film strip will increase its outer diameter instead of lowering its inner diameter. To avoid a jam or squeeze of the film strip 21 inside the chamber 20, the same is able to increase in its outer diameter by stretching the tension spring 27 such that the circumference of the film take-up chamber increases very easily. This is caused by a radially effective pressure.

When the film strip 21 is removed from the film transporting device, the film take-up chamber 20 returns to its original shape.

### Reference Numerals

- 10: Photographic camera
- 11: Housing
- 12: Front plate
- 12a, 12b: Halves
- 13: Joint
- 13a, 13b: Joint
- 14: Lens plate
- 15: Taking lens
- 16: Bellows
- 17: Guide rail
- 18: Web
- 19: Film feed chamber
- 20: Film take-up chamber
- 21: Film strip
- 22: Film gate
- 23: Remaining part of the web
- 24: Area
- 25: Cut-out section
- 26: Arms
- 27: Tension spring
- 28: Film advance member
- 29: Outside grip
- 30: Optical axis

## Claims

1. Photographic camera (10) having a device for winding a film strip to form a cylindrical film roll, and a film take-up chamber (20) having a flexible arcuate film guide which allows the outside diameter of the film roll to increase, **characterised by** comprising:
- a housing (11) to which a front plate (12) is hinged and in which a lens plate (14) including a taking lens (15) is slidably guided in the direction of an optical axis (30), the front plate being movable between an open position in which the lens plate is in the picture-taking position and a closed position in which the thickness of the camera depends on the thickness of the housing
- a one-piece flexible web (18) which forms a loop-shaped film feed chamber (19) and a loop-shaped film take-up chamber (20), wherein
said housing (11) has a thickness which is smaller than the diameter of said loop-shaped chambers (19, 20) measured in the direction of said optical axis (30) so that said flexible loop-shaped chambers (19, 20) and the included film strip (21) are pressed into an oval shape when said front plate (12) is in its closed position.

2. Photographic camera according to claim 1, wherein a tension spring (27) is provided which, with its one end, is connected to at least one of the opposite ends of said web (18) and, with its other end, is fixed to said housing (11), whereby the diameter of said film take-up chamber (20) increases by stretching said tension spring (27) when said film strip (21) is fed into said take-up chamber (20).

3. Photographic camera according to claim 1, wherein said tension spring (27) is connected to the free end of said web (18) adjacent to said film take-up chamber (20).

4. Photographic camera according to claim 1, wherein within an area (24) of said film take-up chamber (20) and/or said film feed chamber (19) said web (18) has a width which is greater than the width of the remaining part (23) of said web (18), and wherein in said area (24) a cut-out section (25) is provided having a width greater than the width of said remaining part (23) of said web (18) forming two arms (26) on each side of said cut-out section (25) to which one of said tension springs (27) is connected each, and wherein said remaining part (23) of said web (18) is guided such that said loop-shaped chambers (19, 20) are formed.

5. Photographic camera according to claim 1, wherein said front plate (12) is formed of two halves (12a and 12b) which are hinged at opposite sides of said housing (11).

6. Photographic camera according to claims 1 and 5, wherein said lens plate (14) is connected to said housing (11) by a bellows (16) in a light-tight manner.

7. Photographic camera according to claim 1, 5 and 6, wherein means (17) are provided for guidably connecting said lens plate (14) to said halves (12a, 12b), wherein said lens plate (14) when in its rest position is completely covered by said closed halves (12a, 12b) and wherein said lens plate (14) when in its picture-taking position is fixed when said halves are open.

8. Photographic camera according to claim 1, wherein a film advance member (28) is translationally guided within said housing (11) and has an outside grip (29).

## Revendications

1. Appareil photographique (10) comportant un dispositif destiné à enrouler une bande de film pour former un rouleau de film cylindrique et une chambre de réception de film (20) comportant un guide de film incurvé souple qui permet au diamètre extérieur du rouleau de film d'augmenter, **caractérisé par** :
un logement (11) auquel une plaque avant (12) est articulée et dans laquelle une plaque d'objectif (14) comprenant un objectif de prise de vues 15 est guidée de manière à pouvoir coulisser dans la direction d'un axe optique (30), la plaque avant étant mobile entre une position ouverte à laquelle la plaque d'objectif est à la position de prise de vues et une position fermée à laquelle l'épaisseur de l'appareil photographique dépend de l'épaisseur du logement,
une bande souple en une seule pièce (18) qui forme une chambre d'alimentation de film en forme de boucle (19) et une chambre de réception de film en forme de boucle (20), où
ledit logement (11) présente une épaisseur qui est inférieure au diamètre desdites chambres (19, 20) en forme de boucle, mesuré dans la direction dudit axe optique (30) de sorte que lesdites chambres souples (19, 20) en forme de boucle et la bande de film incluse (21) sont pressées en une forme ovale lorsque ladite plaque avant (12) est à sa position fermée.

2. Appareil photographique selon la revendication 1, dans lequel un ressort de traction (27) est prévu qui, à sa première extrémité, est relié à au moins l'une des extrémités opposées de ladite bande (18) et, à sa seconde extrémité est fixé audit logement (11) grâce à quoi le diamètre de ladite chambre de réception de film (20) augmente en étirant ledit ressort de traction (27) lorsque ladite bande de film (21) est chargé dans ladite chambre de réception de film (20).

3. Appareil photographique selon la revendication 1, dans lequel ledit ressort de traction (27) est relié à l'extrémité libre de ladite bande (18) de manière adjacente à ladite chambre de réception de film (20).

4. Appareil photographique selon la revendication 1, dans lequel à l'intérieur d'une zone (24) de ladite chambre de réception de film (20) et/ou de ladite chambre d'alimentation de film (19) ladite bande (18) a une largeur qui est supérieure à la largeur de la partie restante (23) de ladite bande (18), et où dans ladite zone (24), une section de découpe (25) est prévue ayant une largeur supérieure à la largeur de ladite partie restante (23) de ladite bande (18) formant deux bras (26) de chaque côté de ladite section de découpe (25) à chacun desquels l'un desdits ressorts de traction (27) est relié, et où ladite partie restante (23) de ladite bande (18) est guidée de telle sorte que lesdites chambres en forme de boucle (19, 20) soient formées.

5. Appareil photographique selon la revendication 1, dans lequel ladite plaque avant (12) est constituée de deux moitiés (12a et 12n) qui sont reliées par des charnières à des côtés opposés dudit logement (11).

6. Appareil photographique selon les revendications 1 et 5, dans lequel ladite plaque d'objectif (14) est reliée audit logement (11) par un soufflet (16) d'une manière étanche à la lumière.

7. Appareil photographique selon les revendications 1, 5 et 6, dans lequel un moyen est prévu (17) pour relier de manière à pouvoir les guider ladite plaque d'objectif (14) auxdites moitiés (12a, 12b), où ladite plaque d'objectif (14), lorsqu'elle est à sa position de repos, est complètement recouverte par lesdites moitiés fermées (12a, 12b) et où ladite plaque d'objectif (14), lorsqu'elle est à sa position de prise de vues, est fixe lorsque lesdites moitiés sont ouvertes.

8. Appareil photographique selon la revendication 1, dans lequel un élément d'avance de film (28) est guidé en translation à l'intérieur dudit logement (11) et comporte une prise extérieure (29).

## Patentansprüche

1. Fotografische Kamera (10) mit einer Vorrichtung zum Aufwickeln eines Filmstreifens (21) zu einer zylindrischen Filmrolle, und einer Aufwickelkammer (20) mit einer flexiblen, gewölbten Filmführung, die ermöglicht, dass sich der Außendurchmesser der Filmrolle vergrößert, **gekennzeichnet durch**
- ein Gehäuse (11), an welches eine Frontplatte (12) angelenkt ist, in der eine ein Aufnahmeobjektiv (15) einschließende Objektivplatte (14) in Richtung einer optischen Achse (30) verschiebbar geführt ist, wobei die Frontplatte zwischen einer Offenstellung, in der sich die Objektivplatte in der Aufnahmestellung befindet, und einer Schließstellung bewegbar ist, in der die Dicke der Kamera von der Dicke des Gehäuses abhängig ist,
- ein einstückig ausgebildetes, flexibles Band (18), welches eine schleifenförmige Filmzuführkammer (19) und eine schleifenförmige Filmaufwickelkammer (20) bildet, wobei das Gehäuse (11) eine Dicke aufweist, die in Richtung der optischen Achse (30) gemessen kleiner als der Durchmesser der schleifenförmigen Kammern (19, 20) ist, so dass die flexiblen, schleifenförmigen Kammern (19, 20) und der darin befindliche Filmstreifen (21) in eine ovale Form gedrückt werden, wenn sich die Frontplatte (12) in ihrer Schließstellung befindet.

2. Fotografische Kamera nach Anspruch 1, **dadurch gekennzeichnet, dass** eine Zugfeder (27) vorgesehen ist, die mit ihrem einen Ende mit zumindest einem der gegenüberliegenden Enden des Bandes (18) verbunden und mit ihrem anderen Ende am Gehäuse (11) befestigt ist, wobei sich der Durchmesser der Filmaufwickelkammer (20) durch die Dehnung der Zugfeder (27) beim Einführen des Filmstreifens (21) in die Aufwickelkammer (20) vergrößert.

3. Fotografische Kamera nach Anspruch 1, **dadurch gekennzeichnet, dass** die Zugfeder (27) mit dem freien Ende des Bandes (18) an der Filmaufwickelkammer (20) verbunden ist.

4. Fotografische Kamera nach Anspruch 1, **dadurch gekennzeichnet, dass** innerhalb eines Bereichs (24) der Aufwickelkammer (20) und/oder der Filmzuführkammer (19) das Band (18) eine Breite aufweist, die größer ist als die Breite des restlichen Teils (23) des Bandes (18), und dass in dem Bereich (24) eine Aussparung (25) vorgesehen ist, deren Breite größer ist als die Breite des restlichen Teils (23) des Bandes (18), welches zu beiden Seiten der Aussparung (25) zwei Arme (26) bildet, die jeweils mit einer der Zugfedern (27) verbunden sind, und dass der restliche Teil (23) des Bandes (18) so geführt ist, dass die schleifenförmigen Kammern (19, 20) gebildet werden.

5. Fotografische Kamera nach Anspruch 1, **dadurch gekennzeichnet, dass** die Frontplatte (12) aus zwei Hälften (12a, 12b) besteht, die an gegenüberliegenden Seiten des Gehäuses (11) angelenkt sind.

6. Fotografische Kamera nach den Ansprüchen 1 und 5, **dadurch gekennzeichnet, dass** die Objektivplatte (14) über einen Balgen (16) mit dem Gehäuse (11) lichtdicht verbunden ist.

7. Fotografische Kamera nach den Ansprüchen 1, 5 und 6, **dadurch gekennzeichnet, dass** Mittel (17) vorgesehen sind, um die Objektivplatte (14) gleitend mit den beiden Hälften (12a,12b) zu verbinden, dass die Objektivplatte (14), wenn sie sich in ihrer Ruhestellung befindet, durch die beiden geschlossenen Hälften (12a, 12b) vollständig abgedeckt ist, und dass bei in Aufnahmestellung befindlicher Objektivplatte (14) diese fixiert ist, wenn die beiden Hälften geöffnet sind.

8. Fotografische Kamera nach Anspruch 1, **dadurch gekennzeichnet, dass** ein Filmfortschaltelement (28) innerhalb des Gehäuses (11) verschiebbar geführt ist und ein äußeres Griffstück (29) aufweist.
